# EUROPEAN PATENT SPECIFICATION

(11) **EP 2 417 382 B1**
(45) Date of publication and mention of the grant of the patent: **09.01.2013**
(21) Application number: 09787700.5
(22) Date of filing: 10.04.2009
(51) Int. Cl.: F16K 35/10

(54) **REGULATING DEVICE WITH LOCKABLE KNOB**
REGULIERVORRICHTUNG MIT VERRIEGELBAREM KNOPF
DISPOSITIF DE RÉGLAGE AYANT UN BOUTON VERROUILLABLE

(43) Date of publication of application: 15.02.2012
(73) Proprietor: Camozzi S.p.A. Societa' Unipersonale, 25126 Brescia (IT)
(72) Inventor: CAMOZZI, Geromino, 25065 Lumezzane S.S. Brescia (IT); GNUTTI, Gianluca, I-25065 Lumezzane S.S. Brescia (IT)
(74) Representative: Chimini, Francesco
(86) International application number: PCT/IT2009/000159
(87) International publication number: WO 2010/116393

(56) References cited:
- WO-A1-94/29623
- US-A- 5 664 447
- US-B1- 6 994 106

## Description

This invention concerns a regulating device with lockable knob, that is a regulating device provided with a regulating knob which can be locked in a desired position by a locking system.

There are already well known regulating devices comprising, according to the preamble of claim 1, a main body with a cylindrical portion in which a regulating organ is set, and a regulating knob fitted on said cylindrical portion in such a way as to be able to rotate around the axis of said cylindrical portion to act on said regulating organ. The cylindrical portion and the knob are equipped with complementary angular locking means and the knob can travel axially with regard to the cylindrical portion between an unlocked position, in which said locking means are disengaged for free rotation of the knob, and an angular locked position in which said locking means are engaged to prevent rotation of the knob WO 94/2 9623 describes a device according to the preamble of claim 1.

In a typical embodiment, the device is a pressure regulator, i.e. a device that acts on a known pressure of an incoming fluid (compressor pressure or pressure upstream of the device) and supplies an outgoing "regulated" pressure at the desired value (within the device's functioning limits).

In order to obtain this desired pressure value, a regulator knob is rotated manually. Rotation of the knob, in one sense or the other, increases or decreases the regulated outgoing pressure.

The knob is fitted on a cylindrical portion of the regulating device body which in a pressure regulator is also known as "bell". Knob and bell are made in such a way as to avoid risks of accidental rotation of the knob itself on the regulator bell: for example, once the pressure has been regulated, the operator pushes the knob towards the bell; with this operation a tooth or protuberance on the knob interlocks with a corresponding housing in the bell, thus preventing accidental rotation caused by impacts.

Whenever pressure regulation is required the operator raises the knob, disengaging it from the bell, and turns it until the desired pressure is reached; pushing the knob once more, it engages with the bell, preventing any modification of the regulation set. To carry out further regulation the operator need only repeat the procedure described above.

In certain industrial sectors it is often required, and is sometimes obligatory, that this regulation should be locked with a padlock or similar safety device for reasons of prevention and safety (to avoid accidental interventions) and to avoid tampering, i.e. altering of the set pressure by unauthorised personnel.

So what is needed is a system that can ensure physical locking of the knob by means of a padlock with key or a similar device that prevents pressure regulation when the knob is "under lock and key".

Some industrial sectors, the automotive sector first and foremost, require the use of two or more padlocks, each with a different key kept by a different person, for unlocking the regulator.

Some known solutions have a system integrated into the knob itself for locking the knob to the bell. Once the regulation has been set and the knob pressed, in order to lock it to the bell a mobile element housed in the upper part of the knob is actuated in such a way as to cause the emergence of at least one coupling to which at least one padlock can be applied. As long as the padlocks are in place and the couplings not retracted, the knob cannot be unlocked and the regulation cannot be varied.

Another well known technical solution envisages the use of an additional optional component: locking of the knob is carried out by means of a protective device mounted on the knob and the regulator bell, preventing rotation of the former around the latter. With this protection mounted, the padlock can be inserted, thus preventing any kind of tampering.

A further locking system employed comprises a pin with a through hole that emerges from the upper surface of the knob. When the knob is lowered to engage the bell, the padlock is inserted into the hole in the pin. In this way the knob can no longer be extracted so it is impossible to carry out variations in pressure regulation.

In all these solutions, the application to the regulating device of a padlock to fix the knob in place requires the use of additional and sometimes also complex components involving an increase in the number of parts making the device and in its general complexity. This has a negative influence on the production, storage and assembly costs of the regulating device. In some cases, for example in tough environments, the presence of moving "retractable" parts could in the long term cause malfunctioning or seizing of the locking system.

The purpose of the invention is to propose a regulating device with lockable knob which, with a reliability and efficaciousness at least equal to those of well known solutions, is simpler and cheaper to make.

This purpose is achieved with a regulating device according to claim 1. The dependent claims describe specific and advantageous embodiments of the device according to the invention.

The features and advantages of the regulating device according to the invention will be clear from the following description of preferred embodiments, given merely indicatively and in no way limitative, with reference to the attached figures in which:

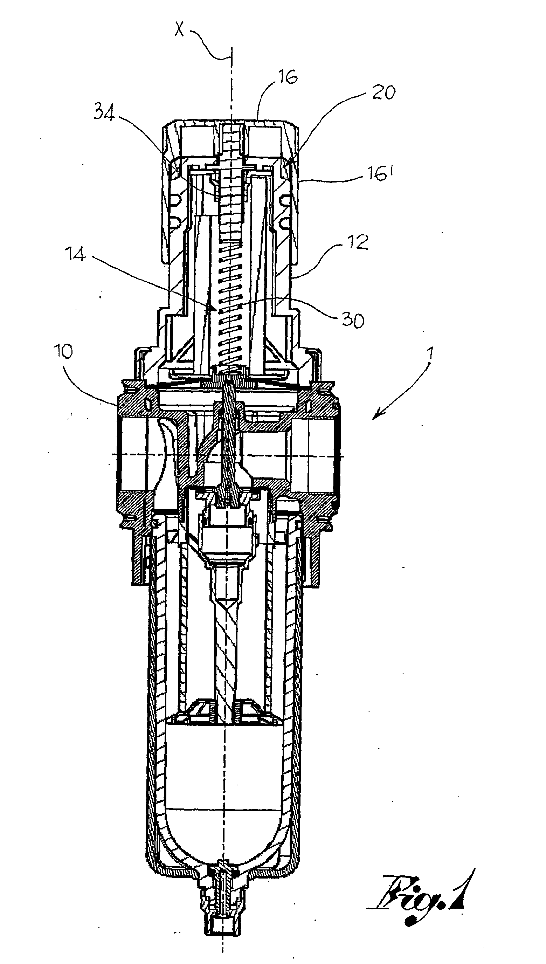

- figure 1 is an axial section of a regulating device according to the invention;

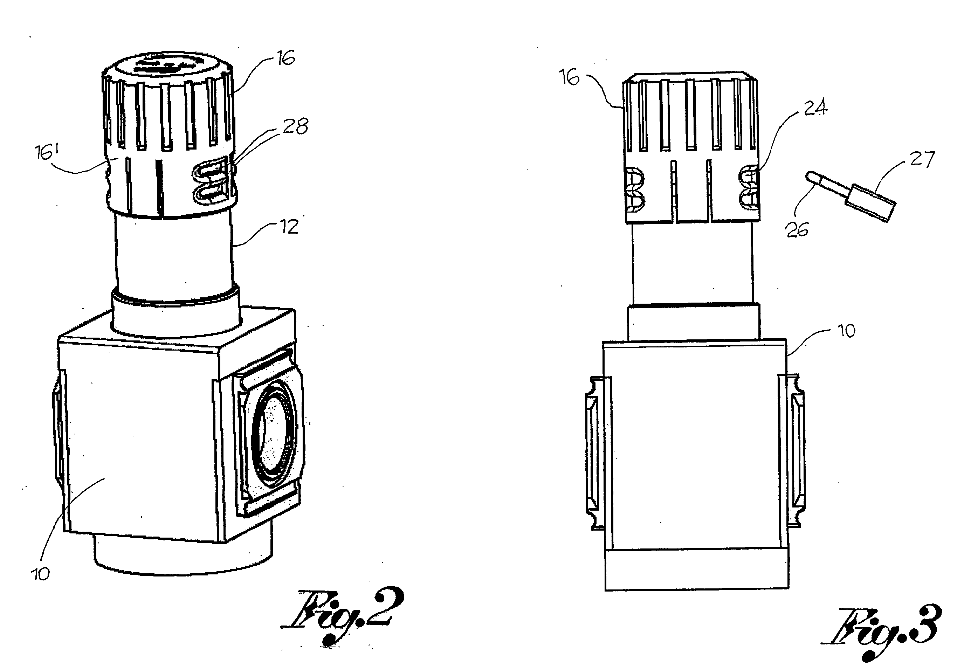

- figure 2 is a perspective view of the device without padlock;

- figure 3 is an elevation view of the device without padlock;

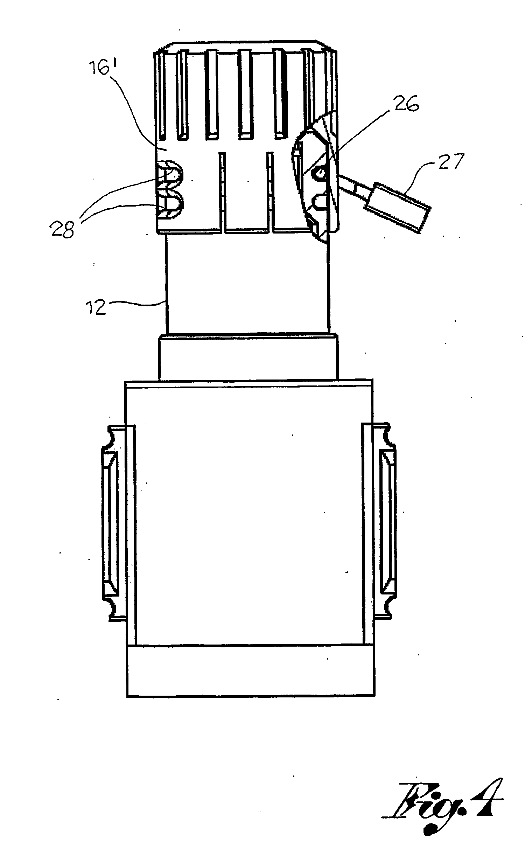

- figure 4 is an elevation view, in partial section, of the device with padlock applied to the knob;

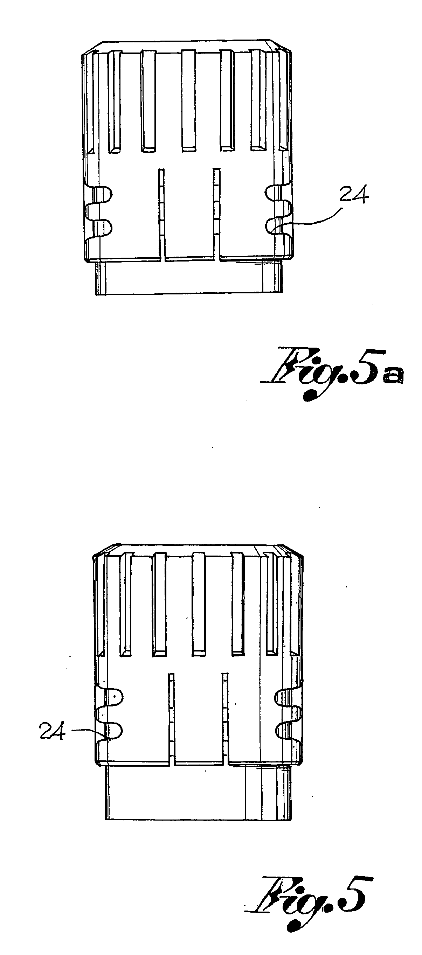

- figures 5 and 5a show the knob in two axial positions, unlocked and locked respectively;

- figure 6 is a perspective view of the knob from below; and

- figure 7 is a perspective view of the cylindrical portion on which the knob is fitted, in one embodiment.

In said drawings, reference number 1 globally indicates the regulating device with lockable knob according to the invention. For simplicity and clarity of explanation, the regulating device described and illustrated is exemplified in the form of a pressure regulator. It is however evident that the innovative features of the device according to the invention may be applied to any regulating device that envisages the use of a regulating knob suitable for turning, to carry out regulation, around a fixed part of the device to which it is fitted and shifted axially with regard to said fixed part, passing from a configuration of rotation locked to an unlocked configuration permitting rotation, and vice versa.

According to a general embodiment, device 1 comprises a main body 10 with a cylindrical portion 12 in which regulating organ 14 is set. A regulating knob 16 is fitted onto said cylindrical potion 12 in such a way as to be able to turn around axis X of said cylindrical portion and act on regulating organ 14 in such a way as to carry out regulation.

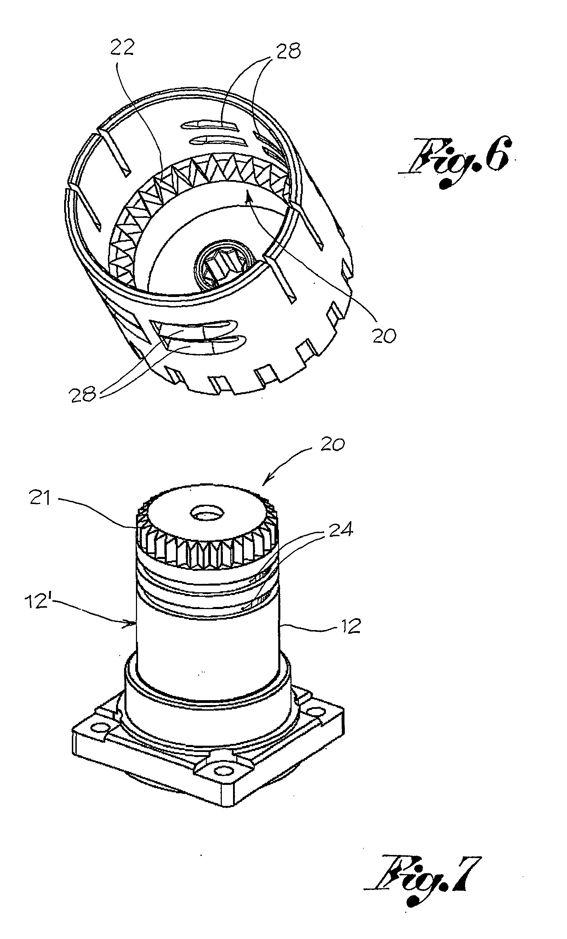

The cylindrical portion 12 and the knob are equipped with complementary angular locking means 20 of the knob. According to one embodiment, cylindrical portion 12 is equipped with a first ring gear 21 suitable for coupling geometrically with a corresponding second ring gear 22 on the internal wall of knob 16 (figures 6 and 7). The knob can shift axially with regard to the cylindrical portion between an unlocked position, in which said locking means 20 are disengaged for free rotation of the knob, and an angular locked position, in which said locking means 20 are engaged to prevent rotation of the knob. In the example illustrated, during the regulation phase the teeth of ring gears 21 and 22 are not in contact, thus permitting rotation of knob 16 with regard to cylindrical portion 12. When regulation has been carried out, by pushing the knob towards the cylindrical portion, the first lowers in such a way to brings the teeth into engagement thus preventing rotation of knob 16 and consequently any variation of regulation.

Moreover, on the external lateral surface 12' of cylindrical portion 12 there is at least one transversal notch 24 profiled in such a way as to be engaged by the hook 26 of a padlock 27 or a similar safety device.

According to one embodiment, knob 16 has a lateral surface 16', for example of cylindrical form, which overlies external lateral surface 12' of cylindrical portion 12. In lateral wall 16' of knob 16 there is at least one pair of apertures 28, close and aligned circumferentially, which is to say in a plane at right angles to rotation axis X, in such a way as to create an opening for hook 26 of padlock 27 through lateral wall 16' of knob 16.

Transversal notch 24 and apertures 28 are aligned when the knob is in the angular locking position, which is to say engaged with the locking means 20, in such a way that hook 26 of a padlock inserted into the through hole of the knob engages transversal notch 24 of cylindrical portion 12, axially locking knob 16.

In order to achieve secure axial locking of the knob, between the lateral wall of the knob and the lateral surface of the cylindrical portion there should not be such play as to permit padlock hook 26 to be undermined by notch 24. In other words, the two surfaces must be set at a distance less than the minimum thickness of hook 26.

So when apertures 28 are aligned with notch 24, hook 26 can be passed from one aperture 28 to the other thanks to the internal space defined by notch 24 which therefore constitutes a passage for the hook.

Once hook 26 engages notch 24 it is no longer possible to undermine it from said notch 24 with an axial movement and the knob is consequently bound axially to cylindrical portion 12. The only way to unlock knob 16 is by opening padlock 27 and removing the hook, slipping it through apertures 28.

According to a preferred embodiment, transversal notch 24 has a depth and height at least equal to the section diameter of padlock hook 26. In this way the part of hook 26 in contact with cylindrical portion 12 is completely incorporated in said cylindrical portion, which is to say, not projecting radially from its lateral surface 12'. This carries the advantage of creating knob 16 with a diameter such that its lateral wall just brushes the lateral surface of the cylindrical portion on which it is fitted, thus reducing as much as possible the space occupied by the device. Furthermore, hook 26 is less likely to be undermined by notch 24.

Preferably, transversal notch 24 is obtained along the circumference of cylindrical portion 12. In this way, whatever the angular position of knob 16, apertures 28 will always be in correspondence to a portion of notch 24 (when the knob is shifted to locking position).

Advantageously, in lateral wall 16' of knob 16 there are at least two pairs of diametrically opposed apertures 28. In fact with more pairs of apertures 28 there is an increased possibility that during rotation there will always be two apertures facing the user and therefore handily accessible for inserting the padlock, for example also in cases where regulating device 1 is wall-mounted and therefore not accessible from all positions.

According to one embodiment, in cylindrical portion 12 there are at least two transversal notches 24 axially distanced and, in lateral wall 16' of knob 16, there are at least due corresponding pairs of apertures 28. This means that at least two padlocks 27 can be used in applications requiring maximum safety, for example in the automotive sector which requires three padlocks.

As anticipated above, in one embodiment the regulating organ 14 is adapted to regulate the pressure of a fluid incoming to the main body 10.

For example, spring 30 is housed in cylindrical portion 12 and acts on pressure regulation membrane 32. The knob 16 is of one piece with a shaft 34 screwed into an axial hole of said cylindrical portion 12 and acting on spring 30 in such a way as to modify its load.

The regulating device according to the invention is therefore functional and at the same time easy and cheap to manufacture. The knob is in fact one single component, easily obtainable for example by moulding. Storage and assembly costs are also the same as for a device without lockable knob.

The main innovative aspect of the invention is therefore the absence of additional elements or complex mechanisms for the creation of an extremely safe, reliable and user-friendly regulating device.

On the embodiments of the regulating device according to the invention a man skilled in the art could, to satisfy contingent requirements, carry out modifications, adaptations and the replacement of elements with other functionally equivalent one, this without departing from the scope of protection as defined by the following claims. Each of the features described as belonging to a possible embodiment may be created independently of the other embodiments described.

## Claims

1. Regulating device (1), comprising:
- a main body (10) with a cylindrical portion (12) in which a regulating organ (14) is at least partially set;
- a regulating knob (16) fitted onto said cylindrical portion (12) in such a way as to be able to rotate around the axis of said cylindrical portion (12) in order to act upon said regulating organ (14);
where said cylindrical portion (12) and said knob (16) are provided with complementary angular locking means (20), and where the knob (16) can be shifted axially with regard to the cylindrical portion (12) between an unlocked position, in which said locking means (20) are disengaged for free rotation of the knob (16) , and an angular locked position, in which said locking means (20) are engaged to prevent rotation of the knob (16);
**characterised in that** on the external surface of said cylindrical portion (12) there is at least one transversal notch (24) suitable to be engaged by a padlock hook (26) and **in that** in the lateral wall of the knob (16) there is at least one pair of apertures (28), close and aligned circumferentially in such a way as to define a through hole for said padlock hook (26), said transversal notch (24) and said pair of apertures (28) being aligned when the knob (16) is in the angular locking position in such a way as to allow a padlock hook (26) inserted in the through hole of the knob (16) to engage the transversal notch (24) of the cylindrical portion (12), axially locking the knob.

2. Device according to claim 1, wherein said transversal notch (24) has a depth and height at least equal to the section diameter of the padlock hook (26).

3. Device according to claim 1 or 2, wherein said transversal notch (24) is set along the circumference of the cylindrical portion (12).

4. Device according to claim 3, wherein there are at least two pairs of diametrically opposed apertures (28) in the lateral wall of the knob (16).

5. Device according to any of the previous claims, wherein in the cylindrical portion (12) there are at least two axially distanced transversal notches (24) and in which there are at least two corresponding pairs of apertures (28) in the lateral wall of the knob (16).

6. Device according to any of the previous claims, in which said angular locking means (20) comprise a first ring gear (21) in the cylindrical portion (12) and a second ring gear (22) on the internal wall of the knob (16) suitable for coupling geometrically with said first ring (21).

7. Device according to any of the previous claims, wherein the regulating organ (1) is suitable for regulating the pressure of a fluid incoming to the main body (10).

8. Device according to claim 6, wherein the cylindrical portion (12) houses a spring (30) that acts on a pressure regulation membrane (22) and in which the knob (16) is of a piece with a shaft (34) which is screwed into an axial hole in said cylindrical portion (12) and acts on the spring (30) in such a way as to modify its load.

## Patentansprüche

1. Reguliervorrichtung (1), die umfasst:
- einen Hauptkörper (10) mit einem zylindrischen Abschnitt (12), in den ein Regulierungsorgan (14) wenigstens teilweise eingebaut ist;
- einen Regulierungsknopf (16), der in einer derartigen Weise auf den zylindrischen Abschnitt (12) montiert ist, dass er fähig ist, sich um die Achse des zylindrischen Abschnitts (12) zu drehen, um auf das Regulierungsorgan (14) einzuwirken;
wobei der zylindrische Abschnitt (12) und der Knopf (16) mit komplementären Winkelverriegelungsmitteln (20) versehen sind, und wobei der Knopf (16) in Bezug auf den zylindrischen Abschnitt (12) zwischen einer entriegelten Position, in der die Verriegelungsmittel (20) für die freie Drehung des Knopfs (16) gelöst sind, und einer winkel verriegelten Position, in der die Verriegelungsmittel (20) in Eingriff sind, um die Drehung des Knopfs (16) zu verhindern, axial verschoben werden kann;
**dadurch gekennzeichnet, dass** es auf der Außenfläche des zylindrischen Abschnitts (12) wenigstens eine transversale Kerbe (24) gibt, die für den Eingriff durch einen Haken (26) eines Vorhängeschlosses geeignet ist, und dass es in der Seitenwand des Knopfs (16) wenigstens ein Paar nahegelegener Öffnungen (28) gibt, die in der Umfangsrichtung in einer derartigen Weise ausgerichtet sind, dass sie ein Durchgangsloch für den Vorhängeschlosshaken (26) definieren, wobei die transversale Kerbe (24) und das Paar von Öffnungen (28) in einer derartigen Weise ausgerichtet sind, dass, wenn der Knopf (16) in der Winkelverriegelungsposition ist, zugelassen wird, dass ein Vorhängeschlosshaken (26) in das Durchgangsloch des Knopfs (16) eingesetzt wird, um in die transversale Kerbe (24) des zylindrischen Abschnitts (12) einzugreifen, wobei der Knopf axial verriegelt wird.

2. Vorrichtung nach Anspruch 1, wobei die transversale Kerbe (24) eine Tiefe und Höhe hat, die wenigstens gleich dem Schnittdurchmesser des Vorhängeschlosshakens (26) ist.

3. Vorrichtung nach Anspruch 1 oder 2, wobei die transversale Kerbe (24) entlang des Umfangs des zylindrischen Abschnitts (12) eingerichtet ist.

4. Vorrichtung nach Anspruch 3, wobei es wenigstens zwei Paare von diametral entgegengesetzten Öffnungen (28) in der Seitenwand des Knopfs (16) gibt.

5. Vorrichtung nach einem der vorhergehenden Ansprüche, wobei es in dem zylindrischen Abschnitt (12) wenigstens zwei axial beabstandete transversale Kerben (24) gibt, in denen es wenigstens zwei entsprechende Paare von Öffnungen (28) in der Seitenwand des Knopfs (16) gibt.

6. Vorrichtung nach einem der vorhergehenden Ansprüche, wobei die Winkelverriegelungsmittel (20) einen ersten Zahnkranz (21) in dem zylindrischen Abschnitt (12) und einen zweiten Zahnkranz (22) auf der Innenwand des Knopfs (16), der geeignet ist, geometrisch mit dem ersten Kranz (21) zu koppeln, umfassen.

7. Vorrichtung nach einem der vorhergehenden Ansprüche, wobei das Regulierungsorgan (1) geeignet ist, den Druck eines Fluids, das an dem Hauptkörper (10) ankommt, zu regulieren.

8. Vorrichtung nach Anspruch 6, wobei der zylindrische Abschnitt (12) eine Feder (30) unterbringt, die auf eine Druckregulierungsmembran (32) wirkt, und wobei der Knopf (16) von einem Stück mit einem Schaft (34) ist, der in ein Axialloch in dem zylindrischen Abschnitt (12) geschraubt ist und in einer derartigen Weise auf die Feder (30) wirkt, dass ihre Last modifiziert wird.

## Revendications

1. Dispositif régulateur (1), comprenant :
- un corps principal (10) avec une partie cylindrique (12) dans laquelle un organe régulateur (14) est au moins partiellement placé ;
- un bouton de régulation (16) installé sur ladite partie cylindrique (12) de manière telle à être capable de tourner autour de l'axe de ladite partie cylindrique (12) afin d'agir sur ledit organe régulateur (14) ;
où ladite partie cylindrique (12) et ledit bouton (16) sont pourvus de moyens complémentaires de verrouillage angulaire (20), et où le bouton (16) peut être déplacé axialement par rapport à la partie cylindrique (12) entre une position déverrouillée, dans laquelle lesdits moyens de verrouillage (20) sont séparés pour la rotation libre du bouton (16), et une position verrouillée angulaire, dans laquelle lesdits moyens de verrouillage (20) sont en prise pour empêcher la rotation du bouton (16) ;
**caractérisé en ce que**, sur la surface externe de ladite partie cylindrique (12), il y a au moins une encoche transversale (24) appropriée pour qu'un crochet de cadenas (26) entre en prise avec et **en ce que**, dans la paroi latérale du bouton (16), il y a au moins une paire d'ouvertures (28), proches et alignées de façon circonférentielle de manière telle à définir un trou débouchant pour ledit crochet de cadenas (26), ladite encoche transversale (24) et ladite paire d'ouvertures (28) étant alignées lorsque le bouton (16) est dans la position de verrouillage angulaire de manière telle à permettre à un crochet de cadenas (26) inséré dans le trou débouchant du bouton (16) d'entrer en prise avec l'encoche transversale (24) de la partie cylindrique (12), verrouillant le bouton axialement.

2. Dispositif selon la revendication 1, dans lequel ladite encoche transversale (24) possède une profondeur et une hauteur au moins égales au diamètre de section du crochet de cadenas (26).

3. Dispositif selon la revendication 1 ou 2, dans lequel ladite encoche transversale (24) est placée le long de la circonférence de la partie cylindrique (12).

4. Dispositif selon la revendication 3, dans lequel il y a au moins deux paires d'ouvertures diamétralement opposées (28) dans la paroi latérale du bouton (16).

5. Dispositif selon une quelconque des revendications précédentes, dans lequel, dans la partie cylindrique (12), il y a au moins deux encoches transversales éloignées axialement (24) et dans laquelle il y a au moins deux paires correspondantes d'ouvertures (28) dans la paroi latérale du bouton (16).

6. Dispositif selon une quelconque des revendications précédentes, dans laquelle lesdits moyens de verrouillage angulaire (20) comprennent une première couronne dentée (21) dans la partie cylindrique (12) et une seconde couronne dentée (22) sur la paroi interne du bouton (16), appropriée pour s'accoupler géométriquement avec ladite première couronne (21).

7. Dispositif selon une quelconque des revendications précédentes, dans lequel l'organe régulateur (1) est approprié pour réguler la pression d'un fluide arrivant dans le corps principal (10).

8. Dispositif selon la revendication 6, dans lequel la partie cylindrique (12) loge un ressort (30) qui agit sur une membrane de régulation de pression (32) et dans laquelle le bouton (16) est monobloc avec un arbre (34) qui est vissé dans un trou axial dans ladite partie cylindrique (12) et agit sur le ressort (30) de manière telle à modifier sa charge.
